# EUROPEAN PATENT SPECIFICATION

(11) **EP 4 488 624 B1**
(45) Date of publication and mention of the grant of the patent: **21.10.2026**
(21) Application number: 23759570.7
(22) Date of filing: 26.01.2023
(51) Int. Cl.: G01C 15/00, G01C 15/06, G01C 15/02

(54) **SURVEYING METHOD, TARGET MARKER, AND SURVEYING SYSTEM**
VERMESSUNGSVERFAHREN, ZIELMARKER UND VERMESSUNGSSYSTEM
PROCÉDÉ D'ARPENTAGE, MARQUEUR CIBLE, ET SYSTÈME D'ARPENTAGE

(30) Priority: 28.02.2022 JP 2022029042
(43) Date of publication of application: 08.01.2025
(73) Proprietor: IXS Co., Ltd., Kawasaki-shi, Kanagawa, 212-0032 (JP)
(72) Inventor: YAMASAKI, Fuminori, Kawasaki-shi, Kanagawa 212-0032 (JP); KARINO, Takashi, Kawasaki-shi, Kanagawa 212-0032 (JP); MAEDA, Kosuke, Kawasaki-shi, Kanagawa 212-0032 (JP)
(74) Representative: TBK
(86) International application number: PCT/JP2023/002381
(87) International publication number: WO 2023/162564

(56) References cited:
- WO-A1-2017/208396
- WO-A1-2018/143151
- CN-A- 106 461 391
- CN-A- 106 979 773
- JP-A- 2011 053 031
- JP-A- 2018 048 866
- JP-A- 2018 197 949
- KR-B1- 101 349 957
- US-A1- 2012 124 850
- US-A1- 2012 124 850
- US-A1- 2014 160 115
- US-A1- 2020 355 499
- US-B1- 6 671 058

## Description

### TECHNICAL FIELD

This invention relates to a surveying method with use of a laser scanner, and, a target marker and a surveying system applicable to the surveying method.

### BACKGROUND ART

Surveying is an important and indispensable technology in the fields of architecture and civil engineering.

Surveying with use of a laser scanner has widely spread in these years, for which various technologies have been developed (see JP 2015-087307 A, for example).

JP 2015-087307 A discloses a surveying method making use of a total station with a tracking function.

The surveying method disclosed in JP 2015-087307 A makes an effective use of a mobile measuring instrument (equipped with a laser range finder and a photographing device) besides the aforementioned total station, and merges measurement results from the total station and the mobile measuring instrument to reduce spots in a blind area, without repositioning the total station. The surveying method disclosed in JP 2015-087307 A thus enables accurate survey over a wider area, as compared with the surveying with use of the total station only.

Furthermore, US 2012/124850 A1 discloses a geodetic target for use in geodesy, comprising a support, a measuring target supported by the support, an identifier supported by the support, wherein the identifier including at least one identification element which is configured to be switchable between at least two optical states, wherein the identification element has a first predetermined optical property in one optical state and does not have the first predetermined optical property in a further optical state. A controller is configured to change the optical state of the at least one identification element.

Still further, US 6 671 058 B1 refers to a method for determining the position and rotational position of an object with object structures of known dimension in three-dimensional space using an optical measuring head having an imaging optical system with imaging properties, an optoelectronic detector which is position-resolving in two dimensions, and an evaluation system.

Moreover, KR 101 349 957 B1 shows an apparatus integrally formed with a staff, for adjusting the height of the digital staff, measuring a distance between landmarks.

### SUMMARY OF THE INVENTION

### TECHNICAL PROBLEM

The surveying method disclosed in JP 2015-087307 A needs alignment of a three-dimensional model created on the basis of measurement result from a main measuring instrument (total station), with a three-dimensional model created on the basis of measurement result from a sub-measuring instrument (mobile measuring instrument), making use of some feature point as a reference position. JP 2015-087307 A, however, gives no description on this issue.

Now, it is a known technique in the measurement with use of the laser scanner to place the target marker at a predetermined position in a real space, and to conduct a post process with reference to the position of a point cloud corresponded to the target marker, detected from the measurement result (point cloud data).

This technique is applicable to the surveying method disclosed in JP 2015-087307 A, by which the reference position for alignment might be determined, and the merging process might be feasible making use of the reference position. In this technique, the process for detecting the point cloud that corresponds to the target marker from the measurement result may, however, encounter difficulties in some cases in distinguishing the target marker from any other object that resides behind. This inhibits determination of the reference position with sufficient accuracy, and makes the surveying incorrect.

Considering the situation, it is therefore an object of this invention to provide a highly accurate surveying method with use of a laser scanner, and, a target marker and a surveying system applicable to the surveying method.

### SOLUTION TO PROBLEM

According to this invention, the above object is achieved by a surveying method according to claim 1 and a surveying system according to claim 2.

When measuring a retroreflective material with a laser scanner, incident light on the retroreflective material and reflected light from the retroreflective material will have the same phase, so that a position where the retroreflective material resides is usually judged to be unsurveyable, and is processed as an error.

This invention relates to a technique turning such disadvantage into an advantage, in which computer processing is executed so as to create an error map that indicates at least one unsurveyable area from the point cloud data acquired by the measurement with use of the laser scanner, and to identify a position of placement of the target marker referring to the created error map (for example, an area where unsurveyable points are concentrated is identified as the position of placement of the target marker).

Since unsurveyability (a property of being unsurveyable) is less susceptible to dependence on an environment of placement of the target marker, so that this invention can detect a point cloud that corresponds to the target marker more accurately than the computer processing on the basis of a feature having been focused by the prior technique (for example, shape, color and so forth of the target marker). Accordingly, this invention enables accurate surveying.

### ADVANTAGEOUS EFFECTS OF INVENTION

According to this invention, there are provided a highly accurate surveying method with use of a laser scanner, and, a target marker and a surveying system applicable to the surveying method.

### BRIEF DESCRIPTION OF DRAWINGS

FIG. 1 is a schematic diagram illustrating a concept of a surveying method of this invention.
FIG. 2 is a drawing illustrating a target marker of this invention.
FIG. 3 is a drawing illustrating an error map created from a measurement result of the target marker illustrated in FIG. 2.
FIG. 4 is a flowchart of a surveying method of this invention.

### DESCRIPTION OF EMBODIMENTS

Embodiments of this invention will be explained below referring to the attached drawings. Note that all similar constituents in all drawings will have the same reference signs to properly skip the explanation as appropriate.

### < Structure of System Used for Surveying Method of This Invention >

First, a structure of a system used for the surveying method of this invention will be explained.

For the surveying method of this invention, there are used a target marker 10 placed in a real space to be surveyed, a laser scanner 20 that measures a surrounding space around the target marker 10 to acquire three-dimensional point cloud data, and a computer device 30 that analyzes the point cloud data acquired by the laser scanner 20.

Note that a system having the target marker 10, the laser scanner 20, and the computer device 30 of this embodiment corresponds to the "surveying system" of this invention.

The laser scanner 20, in the measurement, preferably scans a measurement area with laser light, and shoots the measurement area with a camera, to acquire image data.

The computer device 30, although not illustrated in this embodiment, is communicatively connected to the laser scanner 20, and can receive point cloud data and image data, every time the laser scanner 20 acquires these data. The laser scanner 20 and the computer device 30 are, however, not always necessarily connected through communication during the surveying. For example, data exchange between the laser scanner 20 and the computer device 30 may rely upon storing of the point cloud data and the image data by the laser scanner 20 during the survey, and reading of these data by the computer device 30 after completion of a series of processes relevant to the surveying.

The computer device 30 preferably has hardware resources (CPU, ROM, RAM, etc.) with sufficient performances for their purposes, and can judge color of the individual point clouds, by analyzing the point cloud data and the image data acquired from the laser scanner 20.

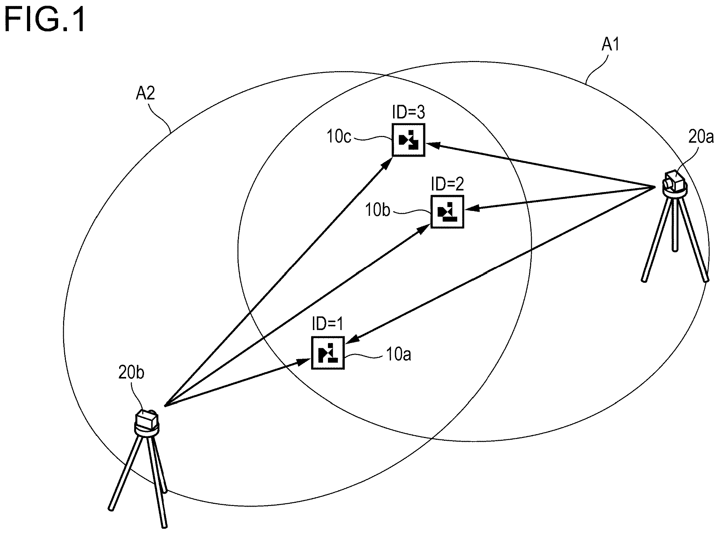

FIG. 1 is a schematic drawing illustrating a concept of the surveying method of this invention. Area A1 illustrated in FIG. 1 represents a measurement area of a laser scanner 20a, and area A2 illustrated in FIG. 1 represents a measurement area of a laser scanner 20b. Now, each of the area A1 and the area A2 is understood to be an area where the point cloud data is obtainable by a single run of surveying.

If a region to be surveyed is larger than the measurement area for the single run, multiple runs of surveying are conducted as illustrated in FIG. 1 so as to overlap the measurement areas (area A1 and area A2) for the multiple runs, from which point cloud data for the entire region to be surveyed is obtainable by merging the point cloud data thus acquired by the individual runs.

At positions in an area where the individual measurement areas overlap, there are placed target markers 10 (target marker 10a, target marker 10b, target marker 10c), while making the points of measurement of the individual target markers 10 serve as reference positions for alignment in the merging process. The number of target markers 10 to be placed is preferably three, from the viewpoint of highly accurate merging of the three-dimensional point cloud data. Such three target markers 10a, 10b and 10c are preferably associated with identification information that identifies each of them. In this embodiment, the identification information for the target marker 10a will be denoted by "1", for the target marker 10b by "2", and for the target marker 10c by "3" for convenience (individually denoted by "ID = 1", "ID = 2", and "ID = 3" in FIG. 1).

Note that, when implementing the surveying method of this invention, the number of target markers 10 is not limited to three, instead allowing one or two for the implementation. Although FIG. 1 illustrates a concept of overlapping the measurement area for two runs, a case where three or more times of measurement are required for surveying a desired region will need placement of the target markers 10 in overlapped parts of the individual measurement areas, wherein the number of the target markers 10 will increase as the number of runs of measurement increases. Hence in some example, the number of the target markers 10 can exceed three.

The merging with use of the computer device 30 needs to detect a point cloud that corresponds to each target marker 10, from the point cloud data obtained as a result of each measurement. However, any effort for detecting the point cloud that corresponds to each target marker 10, on the basis of features such as shape or color of the target marker 10, would fuse the point cloud into a point cloud that corresponds to other object that resides behind the target marker 10, making it unable to align the individual point cloud data with sufficient accuracy.

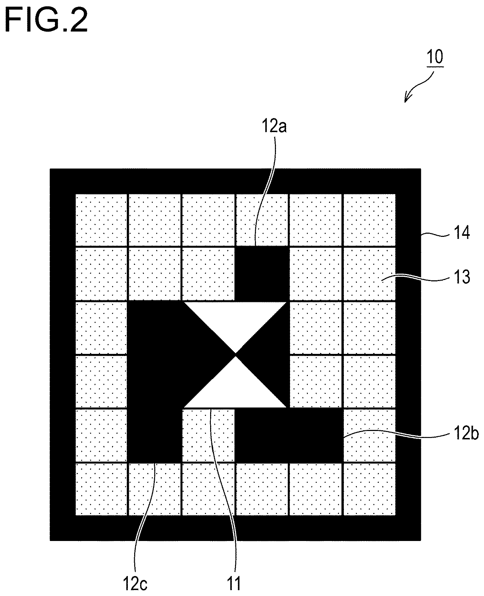

Now, the target markers 10 in this invention is devised as follows. FIG. 2 is a drawing illustrating the target marker 10 of this invention.

As illustrated in FIG. 2, the target marker 10 is roughly divided into a plural kinds of region, which will be individually referred to region 11, region 12, region 13, and region 14 in this embodiment. Note that region 12 is a collective term for a region 12a, a region 12b, and a region 12c illustrated in FIG. 2.

The region 11 has a pattern or a color that indicates the center position of the target marker 10, which is given in this embodiment by a pattern having two blank triangles and two black triangles are combined therein, where a point where the apexes of the four triangles meet corresponds to the center position of the target marker 10. The region 11 corresponds to the "second region" in this invention.

The region 12 is a region where the identification information assigned to the target marker 10 is expresses by a pattern (that is, a region that contains a shape, a pattern, or a color making the target marker distinguishable from other target marker). The region 12 corresponds to the "first region" in this invention. Now, "the identification information expressed by a pattern" means that the computer device 30 gives the identification information to the target marker 10, in a manner automatically recognizable (in a manner readable after arithmetic processing) by the computer device 30 from measurement result of the laser scanner 20 (point cloud data and image data).

The region 13 has a retroreflective material provided thereto, and surrounds the region 11 and the region 12. The retroreflective material means a material that can reflect light, coming from a light source over a wide angle of irradiation, to a direction approximately aligned with the light path of the incident light, in contrast to regular (specular) reflection. As described previously, the irradiated light from the laser scanner 20 and the reflected light on the retroreflective material will have the same phase, so that the laser scanner 20 that receives the reflected light cannot acquire processable point cloud data within a range where the region 13 resides, and judges the range to be unsurveyable.

The region 14 is provided at the extreme end of the target marker 10, and surrounds the region 11, the region 12 and the region 13.

The target marker 10 used in this embodiment is a flat plate, whose both faces individually have the identification information patterns (shape, pattern or color of the region 12) which are the same on both faces. Hence, the computer device 30 can read the same identification information, regardless of the side of measurement by the laser scanner 20.

The region 11, the region 12 and the region 14 may only be formed of a material different from the retroreflective material, and are preferably formed of a high reflectivity material that can cause regular or substantially regular reflection, since this enables the computer device 30 to easily distinguish the region 13 from other region in the analysis.

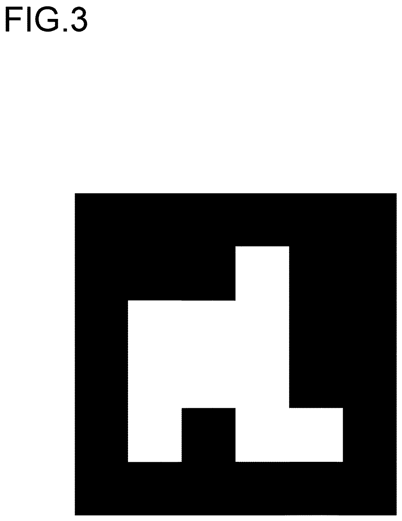

FIG. 3 is a drawing illustrating an error map created from the measurement result of the target marker illustrated in FIG. 2.

In FIG. 3, the blacked out area represents an area (error map) having been unsurveyable by the laser scanner 20, on the basis of which the computer device 30 judges that the area corresponds to the region 13, and that the point clouds acquired from the vicinity of the area are point clouds that represent the positions of placement of the target markers 10 (region 11, region 12, and region 14).

Again in FIG. 3, the blanked area surrounded by the blacked out area is an area where the point clouds that correspond to the region 11 and the region 12 reside, on the basis of which the computer device 30 analyzes the shape and color and so forth represented by these point clouds, to determine the center position of the target marker 10 and the identification information.

The computer device 30 does not always necessarily judge all of the areas having been unsurveyable by the laser scanner 20 to be the area that corresponds to the region 13, and instead preferably narrows down the area that corresponds to the region 13, on the basis of other conditions.

For example, the computer device 30 may alternatively analyze the shape of the unsurveyable area represented by the error map, and may identify the area as the position of placement of the target marker 10 (region 13), on condition that the analyzed shape matches a predetermined shape (in this embodiment, the analyzed shape has a square contour).

Alternatively, the computer device 30 may analyze the size of the unsurveyable area represented by the error map, and may identify any area as the position of placement of the target marker (region 13), on condition that the size of such any area falls within predetermined threshold values (smaller than the upper threshold value, and larger than the lower threshold value).

Note that the aforementioned conditions may be properly modified so far as the purpose of this invention is achievable, allowing application of any other known conditions not described in this specification.

As has been described above, the target marker 10 has the region 13, and this enables the computer device 30 to create the error map that represents the unsurveyable area, on the basis of the measurement results obtained by the laser scanner 20, and to identify the position of placement of the target marker 10, on the basis of the thus created error map.

And since the target marker 10 has the region 11, the computer device 30 can analyze the shape, pattern or color of the region 11, to detect by computation the center position of the target marker 10.

Also since the target marker 10 has the region 12, so that the computer device 30 can analyze the shape, pattern or color of the region 12, to identify the identification information assigned to the target marker 10.

### < Process Procedures of Surveying Method of This Invention >

Next, process procedures of the surveying method of this invention will be explained.

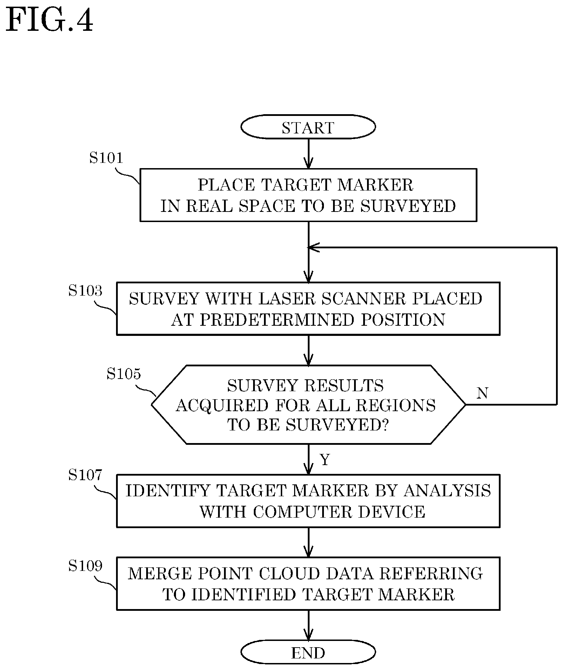

FIG. 4 is a flowchart illustrating the surveying method of this invention.

First, a person who conducts surveying places the target marker 10 illustrated in FIG. 2, in a real space to be surveyed (step S101). The process in step S101 corresponds to "marker placement" in this invention.

Next, the person who conducts surveying places the laser scanner 20 at a predetermined position, and measures any region surveyable from the position, to acquire measurement result (point cloud data and image data) (step S103). The process in step S103 corresponds to "surveying" in this invention.

If the measurement result has not been acquired by the laser scanner 20 for the region to be surveyed (NO, in step S105), the person who conducts surveying repositions the laser scanner 20 to another place, and measures the region surveyable from the new place.

The person who conducts surveying repeats the process of step S103 multiple times by repositioning the laser scanner 20, until the measurement results are acquired by the laser scanner 20 from all regions to be surveyed 20 (YES, in step S105).

Referring now to an exemplary case illustrated in FIG. 1, first, the point cloud data is acquired for the area A1, from the first position where the laser scanner 20 was placed. Next, the laser scanner 20 is repositioned, and the point cloud data is acquired for the area A2 from the new position. Now, the process in step S103 for the area A1 corresponds to the "first surveying" in this invention, and the process for step S103 for the area A2 corresponds to the "second surveying" of this invention.

Next, the computer device 30 analyzes the measurement result of the laser scanner 20 acquired by the processes in step S101 to step S105, detects any unsurveyable area to create the error map, and identifies the position of placement of the target marker 10 referring to the created error map (step S107). The process in step S107 corresponds to the "marker identification" of this invention.

The computer device 30 then merges the individual point cloud data acquired for the individual measurements with the laser scanner 20 (step S109), with reference to the position of placement of the target marker 10 identified in step S107.

Referring to an exemplary case illustrated in FIG. 1, the computer device 30 aligns and merges the point cloud data as the measurement result for the area A1, and the point cloud data as the measurement result for the area A2, while overlapping the positions of placement of the target markers 10a, 10b and 10c identified from each of the point cloud data are overlapped, thereby creating point cloud data for the entire area to be surveyed.

As has been described above, the surveying method of this invention intentionally creates at least one area that are judged to be unsurveyable by the laser scanner 20, by conducting surveying while placing at least one target marker 10, with at least a partial region formed of a retroreflective material, in a real space to be surveyed. The computer device 30 then identifies the position of placement of the target marker 10, referring to an error map that indicates the position of the unsurveyable area, and uses the position of placement for merging the individual point cloud data.

Such method for detecting the target marker 10 is based on an unprecedented idea, and allows computer processing with accuracy higher than that in the prior technique. This invention can therefore automatize merging of the point cloud data with a practically sufficient level of accuracy, making it possible to save manual operation having been spent on the prior process, and to save the human cost in the surveying.

### <Modified Example>

The aforementioned embodiment of this invention may be modified in various ways, within the scope and the purpose of this invention may be achieved.

A modified example having not been explained will be mentioned below.

The aforementioned embodiment has enumerated, as the constituents of the surveying system of this invention, the target markers 10 (target marker 10a, target marker 10b, target marker 10c) and the laser scanners 20 (laser scanner 20a, laser scanner 20b) illustrated in FIG. 1, and unillustrated computer device 30, merely as the constituents necessary for explaining this invention. The surveying system of this invention may, therefore, be embodied by adding other constituent.

Also note that the number of the individual constituents in the aforementioned embodiment is merely illustrative and specific one, instead allowing modification as far as the purpose of this invention may be achieved.

Embodiment of the target marker 10 illustrated in FIG. 2 is a specific example, instead allowing carrying out of this invention with use of the target marker according to other embodiment.

For example, the target marker 10 of this invention, although illustrated in FIG. 2 merely with a part of the region formed of a retroreflective material, may have the entire region thereof formed of the retroreflective material. Also note that the target marker of this invention may have the individual regions only on one face, or may have the individual regions on the front face and the back face placed in different manners.

The processes contained in the flowchart in FIG. 4 are partially omissible so far as the purpose of this invention may be achieved, or may have any unillustrated process added thereto.

For example, the flowchart in FIG. 4 is on the premise that the process in step S103 (measurement with the laser scanner 20) is repeated multiple times, and the individual point cloud data acquired as the individual measurement results are merged in step S109. Meanwhile this invention is applicable to a single run of measurement. This modified example no longer needs merging of the individual point cloud data.

A possible modified example of this invention, when applied to a single run of measurement, may be surveying with use of an origin of coordinates (public coordinates) for the position of placement of the target marker.

This application claims priority to Japanese Patent Application No. 2022-029042 filed on February 28, 2022.

### REFERENCE SIGNS LIST

- 10 (10a, 10b, 10c): target marker
- 20 (20a, 20b): laser scanner
- 30: computer device
- 11, 12, 13, 14: region
- A1, A2: area

## Claims

1. A surveying method comprising:
marker placement in which three or more target markers (10; 10a, 10b, 10c) being placed at respective positions of placements,
each target marker having at least a partial region formed of a retroreflective material, and
having at least one first region that contains a shape, a pattern, or a color making the target marker distinguishable from other target marker, and
being a flat plate whose both faces individually have the first regions which are the same on both faces;
surveying in which a laser scanner (20) is placed at a postion within a measurement area of the laser scanner (20) where the target markers (10; 10a, 10b, 10c) were placed, and a surrounding space around the target markers (10; 10a, 10b, 10c) is surveyed to acquire point cloud data; and
marker identification in which a computer device (30) detects at least one unsurveyable area in the point cloud data acquired in the surveying to create an error map, and identifies the position of placement of the target markers (10; 10a, 10b, 10c) referring to the created error map,
wherein the at least one unsurveyable area results when, during the surveying, incident light reachs the retroreflective material, resulting in incident light on the retroreflective material and reflected light from the retroreflective material having the same phase.

2. A surveying system comprising:
three or more target markers (10; 10a, 10b, 10c) placed at respective placement positions, each target marker
having at least a partial region formed of a retroreflective material, and
having at least one first region that contains a shape, a pattern, or a color making the target marker distinguishable from other target marker, and
being a flat plate whose both faces individually have the first regions which are the same on both faces;
a laser scanner (20) placed at a position within a measurement area where the target markers (10; 10a, 10b, 10c) are contained, and is structured to survey a surrounding space around the target markers (10; 10a, 10b, 10c) to acquire point cloud data; and
a computer device (30) that detects at least one unsurveyable area from the point cloud data acquired by the laser scanner (20) to create an error map, and identifies the positions of placement of the target markers (10; 10a, 10b, 10c) referring to the created error map.
wherein the at least one unsurveyable area results when, during the surveying, incident light reachs the retroreflective material, resulting in incident light on the retroreflective material and reflected light from the retroreflective material having the same phase.

## Patentansprüche

1. Vermessungsverfahren, mit:
einer Zielmarkenplatzierung, bei der drei oder mehr Zielmarken (10; 10a, 10b, 10c) an jeweiligen Platzierungspositionen platziert werden, wobei jede Zielmarke
mindestens einen Teilbereich aufweist, der aus einem retroreflektierenden Material gebildet ist, und
mindestens einen ersten Bereich aufweist, der eine Form, ein Muster oder eine Farbe enthält, wodurch die Zielmarke von anderen Zielmarken unterscheidbar ist, und
eine flache Platte ist, deren beide Flächen jeweils die ersten Bereiche aufweisen, die auf beiden Flächen gleich sind;
einer Vermessung, bei der ein Laserscanner (20) an einer Position innerhalb eines Messbereichs des Laserscanners (20) platziert wird, in dem die Zielmarken (10; 10a, 10b, 10c) platziert wurden, und ein Umgebungsraum um die Zielmarken (10; 10a, 10b, 10c) herum vermessen wird, um Punktwolkendaten zu erfassen; und
einer Zielmarkenidentifizierung, bei der eine Computervorrichtung (30) mindestens einen nicht vermessbaren Bereich in den bei der Vermessung erfassten Punktwolkendaten detektiert, um eine Fehlerkarte zu erstellen, und die Platzierungsposition der Zielmarken (10; 10a, 10b, 10c) unter Bezugnahme auf die erstellte Fehlerkarte identifiziert,
wobei der mindestens eine nicht vermessbare Bereich entsteht, wenn während der Vermessung einfallendes Licht das retroreflektierende Material erreicht, so dass einfallendes Licht auf dem retroreflektierenden Material und reflektiertes Licht von dem retroreflektierenden Material dieselbe Phase aufweisen.

2. Vermessungssystem, mit:
drei oder mehr Zielmarken (10; 10a, 10b, 10c), die an jeweiligen Platzierungspositionen platziert sind, wobei jede Zielmarke
mindestens einen Teilbereich aufweist, der aus einem retroreflektierenden Material gebildet ist, und
mindestens einen ersten Bereich aufweist, der eine Form, ein Muster oder eine Farbe enthält, wodurch die Zielmarke von anderen Zielmarken unterscheidbar ist, und
eine flache Platte ist, deren beide Flächen jeweils die ersten Bereiche aufweisen, die auf beiden Flächen gleich sind;
einem Laserscanner (20), der an einer Position innerhalb eines Messbereichs platziert ist, in dem die Zielmarken (10; 10a, 10b, 10c) enthalten sind, und der konfiguriert ist, um einen Umgebungsraum um die Zielmarken (10; 10a, 10b, 10c) herum zu vermessen, um Punktwolkendaten zu erfassen; und
einer Computervorrichtung (30), die mindestens einen nicht vermessbaren Bereich aus den durch den Laserscanner (20) erfassten Punktwolkendaten detektiert, um eine Fehlerkarte zu erstellen, und die Platzierungspositionen der Zielmarken (10; 10a, 10b, 10c) unter Bezugnahme auf die erstellte Fehlerkarte identifiziert.
wobei der mindestens eine nicht vermessbare Bereich entsteht, wenn während der Vermessung einfallendes Licht das retroreflektierende Material erreicht, so dass einfallendes Licht auf dem retroreflektierenden Material und reflektiertes Licht von dem retroreflektierenden Material dieselbe Phase aufweisen.

## Revendications

1. Procédé d'arpentage comprenant :
un placement de marqueur dans lequel au moins trois marqueurs cibles (10 ; 10a, 10b, 10c) sont placés à des positions de placement respectives,
chaque marqueur cible présentant au moins une zone partielle formée d'un matériau rétroréfléchissant, et
présentant au moins une première zone qui contient une forme, un motif ou une couleur permettant de distinguer le marqueur cible d'un autre marqueur cible, et
étant une plaque plane dont les deux faces présentent individuellement les premières zones qui sont les mêmes sur les deux faces ;
un arpentage dans lequel un scanner laser (20) est placé à une position à l'intérieur d'une zone de mesure du scanner laser (20) où les marqueurs cibles (10 ; 10a, 10b, 10c) ont été placés, et un espace environnant autour des marqueurs cibles (10 ; 10a, 10b, 10c) est arpenté pour acquérir des données de nuage de points ; et
une identification de marqueurs dans laquelle un dispositif informatique (30) détecte au moins une zone ne pouvant être arpentée dans les données de nuage de points acquises lors de l'arpentage pour créer une carte d'erreurs, et identifie la position de placement des marqueurs cibles (10 ; 10a, 10b, 10c) en référence à la carte d'erreurs créée,
l'au moins une zone ne pouvant être arpentée ayant pour résultat quand, pendant l'arpentage, une lumière incidente atteint le matériau rétroréfléchissant, le fait qu'une lumière incidente sur le matériau rétroréfléchissant et qu'une lumière réfléchie par le matériau rétroréfléchissant ont la même phase.

2. Système d'arpentage comprenant :
au moins trois marqueurs cibles (10 ; 10a, 10b, 10c) placés à des positions de placement respectives, chaque marqueur cible
présentant au moins une zone partielle formée d'un matériau rétroréfléchissant, et
présentant au moins une première zone qui contient une forme, un motif ou une couleur permettant de distinguer le marqueur cible d'un autre marqueur cible, et
étant une plaque plane dont les deux faces présentent individuellement les premières zones qui sont les mêmes sur les deux faces ;
un scanner laser (20) placé à une position dans une zone de mesure où les marqueurs cibles (10 ; 10a, 10b, 10c) sont contenus, et structuré pour arpenter un espace environnant autour des marqueurs cibles (10 ; 10a, 10b, 10c) pour acquérir des données de nuage de points ; et
un dispositif informatique (30) qui détecte au moins une zone ne pouvant être arpentée à partir des données de nuage de points acquises par le scanner laser (20) pour créer une carte d'erreurs, et identifie les positions de placement des marqueurs cibles (10 ; 10a, 10b, 10c) en référence à la carte d'erreurs créée.
l'au moins une zone ne pouvant être arpentée ayant pour résultat quand, pendant l'arpentage, une lumière incidente atteint le matériau rétroréfléchissant, le fait qu'une lumière incidente sur le matériau rétroréfléchissant et qu'une lumière réfléchie par le matériau rétroréfléchissant ont la même phase.
